# EUROPEAN PATENT APPLICATION

(11) **EP 4 517 940 A1**
(43) Date of publication of application: **05.03.2025**
(21) Application number: 24178005.5
(22) Date of filing: 24.05.2024
(51) Int. Cl.: H01M 10/658, H01M 50/24, H01M 50/293

(54) **INSULATION SHEET FOR BATTERY, MANUFACTURING METHOD THEREOF, AND BATTERY MODULE COMPRISING THE SAME**

(30) Priority: 19.06.2023 KR 20230078078
(71) Applicant: Samsung SDI Co., Ltd., Yongin-si, Gyeonggi-do 17084 (KR)
(72) Inventor: Yang, Seung Yong, 17084 Yongin-si, Gyeonggi-do (KR); Woo, Myung Heui, 17084 Yongin-si, Gyeonggi-do (KR); Ryu, Bo Kyung, 17084 Yongin-si, Gyeonggi-do (KR); Ra, Ha Na, 17084 Yongin-si, Gyeonggi-do (KR); Lee, Jae Hyun, 17084 Yongin-si, Gyeonggi-do (KR); Park, Hye Jin, 17084 Yongin-si, Gyeonggi-do (KR)
(74) Representative: Gulde & Partner

(57) **Abstract**

The present disclosure relates to an insulation sheet for batteries, the insulation sheet including an aerogel layer including an aerogel and a coating layer configured to cover the entire surface of the aerogel layer. The coating layer includes a flexible polymer and a flame retardant dispersed in the flexible polymer, and the elastic modulus of the coating layer measured in accordance with ASTM D882 is 8 MPa or less. The present disclosure also relates to a method of manufacturing the insulation sheet, and a battery module including the insulation sheet.

## Description

### BACKGROUND

### 1. Field

Aspects and embodiments of the present invention relate to an insulation sheet for batteries, a method of manufacturing the same, and a battery module including the same.

### 2. Description of the Related Art

A secondary battery is a power storage system that converts electrical energy into chemical energy, stores the chemical energy, and provides high energy density. Compared to a primary battery, which is not rechargeable, a secondary battery is rechargeable and is typically widely used in information technology (IT) devices such as smartphones, cellular phones, laptop computers, tablet computers , and the like. There is currently an increased interest in electric vehicles to reduce or prevent environmental pollution, and high-capacity secondary batteries are often adopted in electric vehicles. Secondary batteries typically exhibit desirable characteristics such as, e.g., high density, high output, and stability.

When a plurality of high-capacity battery cells is included, as in a lithium ion secondary battery, one battery cell may overheat and may go into thermal runaway for various reasons, which may adversely affect other battery cells adjacent thereto, and therefore it is desirable to thermally isolate neighboring battery cells from each other.

Conventionally, a plate or an insulating resin sheet is located between battery cells to isolate and insulate neighboring battery cells from each other.

### SUMMARY

The present invention is set out in the appended set of claims, wherein the drawings an respective description relate to advantageous embodiments thereof.

The present invention provides an insulation sheet for batteries having excellent or improved thermal insulation, fire resistance, and flame retardancy or non-flammability to reduce or inhibit propagation of heat in a cell to cells adjacent thereto due to thermal runaway of the cell, a method of manufacturing the same, and a battery module including the same.

A first aspect provides an insulation sheet for batteries, the insulation sheet including an aerogel layer including an aerogel and a coating layer configured to cover the entire surface of the aerogel layer, wherein the coating layer includes a flexible polymer and a flame retardant dispersed in the flexible polymer, and the elastic modulus of the coating layer measured in accordance with ASTM D882 is 8 MPa or less.

The aerogel may have a Brunauer, Emmett and Teller (BET) specific surface area in a range of 500 m²/g to 1,000 m²/g.

The aerogel layer may further include a fibrous support and a functional material including a binder, a dispersant, or a combination thereof.

The fibrous support may include at least one selected from the group consisting of natural fiber, silica fiber, glass fiber, carbon fiber, graphite fiber, mineral fiber, and polymer fiber.

The binder may include an aqueous polymer binder.

The dispersant may be or include at least one selected from the group consisting of a surfactant, a silane coupling agent, and a phosphate-based salt.

The aerogel may be included so as to account for a range of 10 wt% to 90 wt%, the fibrous support may be included so as to account for a range of 5 wt% to 70 wt%, and the functional material may be included so as to account for a range of 0.5 wt% to 20 wt%, based on the total amount of the aerogel layer.

The flexible polymer may be at least one selected from the group consisting of a fluorinated polymer, a polyurethane-based polymer, a polyolefin-based polymer, and a silicone-based polymer.

The flame retardant may be at least one selected from the group consisting of an inorganic flame retardant, a phosphorus-based flame retardant, a nitrogen compound-based flame retardant, a silicone-based flame retardant, a melamine-based flame retardant, a halogen-based flame retardant, and a polyhydric alcohol-based flame retardant.

The flame retardant may include at least one of a phosphorus-based flame retardant and a polyhydric alcohol-based flame retardant.

The flame retardant may include a phosphorus-based flame retardant and a polyhydric alcohol-based flame retardant in a weight ratio in a range of 1:0.1 to 1:0.5.

The content of the flame retardant may be in a range of 1 wt% to 25 wt% based on the total amount of the coating layer.

The coating layer may include no filler.

The thickness of the coating layer may be 20% or less of the total thickness of the insulation sheet for batteries.

The flexible polymer may be at least one selected from the group consisting of a polyurethane-based polymer and a silicone-based polymer, and the flame retardant may be at least one selected from the group consisting of a polyhydric alcohol-based flame retardant and a phosphorus-based flame retardant.

Another aspect provides a method of manufacturing an insulation sheet for batteries according to the first aspect, the method including the steps of forming an aerogel layer including an aerogel and forming a coating layer so as to cover the entire surface of the aerogel layer, wherein the coating layer includes a flexible polymer and a flame retardant dispersed in the flexible polymer, and the elastic modulus of the coating layer measured in accordance with ASTM D882 is 8 MPa or less.

A further embodiment provides a battery module including a plurality of cells and the insulation sheet located between the plurality of cells.

### BRIEF DESCRIPTION OF THE DRAWINGS

The accompanying drawings, which are incorporated in this specification, illustrate exemplary embodiments and serve to further illustrate the technical ideas of the disclosure in conjunction with the detailed description of example embodiments that follows, and the disclosure is not to be construed as limited to what is shown in such drawings. In the drawings:
FIG. 1 is a schematic view showing an insulation sheet for batteries according to an embodiment formed between a plurality of cells;
FIG. 2 is a schematic view showing the sectional structure of the insulation sheet for batteries according to the embodiment of FIG. 1; and
FIGS. 3 and 4 are schematic views respectively showing the sectional structures of insulation sheets according to Comparative Examples.

### DETAILED DESCRIPTION OF EXEMPLARY EMBODIMENTS

Hereinafter, embodiments will be described in detail such that a person having ordinary skill in the art can easily implement the embodiments. However, embodiments may be implemented in many different forms and are not limited to the embodiments described herein.

An insulating material, which is a material that hinders or prevents heat from flowing from higher to lower temperatures, is used not only in refrigerators, cold storages, and buildings but also in a variety of other industries, including the aircraft, electronics, and automotive industries.

The insulating material needs to have excellent and advantageously has substantial thermal insulation through low thermal conductivity and mechanical strength to maintain thermal insulation over time.

An aerogel, which is a transparent or translucent advanced material having a nanoporous structure, exhibits very low density and low thermal conductivity, and therefore the aerogel has a high potential as an insulating material and is considered to be a highly efficient super insulating material that can be used in a variety of industrial applications.

A substantial advantage of the aerogel is that the aerogel has a lower thermal conductivity than conventional organic insulating materials such as, e.g., Styrofoam, and that the aerogel is capable of solving or overcoming critical weaknesses of organic insulating materials, such as, e.g., fire vulnerability and generation of harmful gases in the event of fire.

An insulation sheet for batteries according to an embodiment may include an aerogel layer including an aerogel and a coating layer configured to cover the entire surface of the aerogel layer, wherein the coating layer may include a flexible polymer and a flame retardant dispersed in the flexible polymer, and the elastic modulus of the coating layer measured in accordance with ASTM D882 may be 8 MPa or less.

The insulation sheet for batteries having the above structure may have excellent or improved thermal insulation, fire resistance, and flame retardancy or non-flammability, thereby reducing or inhibiting propagation of heat and flames in one cell to cells adjacent thereto due to thermal runaway of the cell. The insulation sheet for batteries may have excellent or improved compressibility, mechanical strength, and dimensional stability, and may reduce or prevent detachment of an aerogel layer due to external impact, thereby improving workability and reducing or preventing contamination of an instrument.

In an embodiment, the aerogel may have a BET specific surface area in a range of 500 m²/g to 1,000 m²/g. For example, the aerogel may have a BET specific surface area in a range of 500 m²/g to 950 m²/g, 550 m²/g to 950 m²/g, or 600 m²/g to 900 m²/g. Because the aerogel having the BET specific surface area value within the above range is included, scattering of aerogel particles may be reduced or prevented, and thermal insulation may be improved.

The particle size of the aerogel may be in a range of 5 µm to 200 µm, 10 µm to 150 µm, 10 µm to 100 µm, or 20 µm to 60 µm. Because the aerogel having the particle size within the above range is included, thermal insulation may be improved, whereby heat transfer between the plurality of cells may be delayed.

The content of the aerogel may be in a range of 10 wt% to 90 wt%, 20 wt% to 80 wt%, 30 wt% to 70 wt%, or 40 wt% to 60 wt%, based on the total amount of the aerogel layer. When the aerogel layer including the aerogel within the above range is included, thermal insulation of the insulation sheet for batteries may be excellent or advantageous.

In an embodiment, the aerogel layer may further include a fibrous support and a functional material including a binder, dispersant, or a combination thereof.

The fibrous support may be included in the aerogel layer, whereby durability of the insulation sheet for batteries formed using the same may be improved.

The fibrous support may include fiber used as a support made of or including an ordinary insulating material. For example, the fibrous support may be or include at least one selected from the group consisting of natural fiber, silica fiber, glass fiber, carbon fiber, graphite fiber, mineral fiber, and polymer fiber. As an example, the fibrous support may include, without being not limited to, glass fiber.

The natural fiber may be or include at least oneselected from the group consisting of, for example, hemp, jute, flax, coir, Kenaf, and cellulose.

The mineral fiber may include at least one selected from the group consisting of, for example, basalt, quartzite, alumina, silica, slag, and rock.

The polymer fiber may be at least one selected from the group consisting of, for example, nylon, polyimide, polyamide, polybenzimidazole, polybenzoxazole, polyamideimide, polyethylene terephthalate, polybutylene terephthalate, polyester, polyethylene (PE), and polypropylene (PP). As an example, the polymer fiber may be at least one selected from the group consisting of, without being limited to, polyimide, polyamide, and polybenzimidazole.

The fibrous support may be, for example, in the form of wool or chopped strands, but is not limited thereto.

The average particle size D50 of the fibrous support may be, for example, in a range of 0.1 µm to 20 µm, 0.1 µm to 15 µm, 0.1 µm to 5 µm, 1 µm to 15 µm, or 3 µm to 10 µm. By including a fibrous support having the average particle size within the above range, the structure of the aerogel layer may be stiffened and manufacturing costs may be reduced.

The average particle size D50 may be measured, for example, using a laser diffraction method or scanning electron microscopy (SEM), wherein the average particle size D50 of particles may be defined as the particle size at 50% of the particle size distribution (the particle size corresponding to cumulative 50% of the volume of the particle size distribution).

The content of the fibrous support may be in a range of 5 wt% to 70 wt%, 25 wt% to 60 wt%, 25 wt% to 50 wt% or 30 wt% to 50 wt%, based on the total amount of the aerogel layer. When an insulation sheet for batteries is manufactured using an aerogel layer including a fibrous support within the above range, durability may be improved.

The binder may include an aqueous polymer binder. For example, the aqueous polymer binder may be at least one selected from the group consisting of a water-based polymer, an anionic water-soluble polymer, a cationic water-soluble polymer, and a water-dispersible polymer.

The water-based polymer may be at least one selected from the group consisting of, for example, without being limited to, polyvinyl alcohol, polyethylene oxide, polyacrylamide, and polyvinylpyrrolidone.

The anionic water-soluble polymer may be at least one selected from the group consisting of carboxylic acid, sulfonic acid, sulfuric acid ester, phosphoric acid ester, and a polymer having functional groups of salts thereof. For example, the anionic water-soluble polymer may be or include a polymer having a carboxylic acid group, and may include, without being limited to, polymaleic acid as an example.

The cationic water-soluble polymer may be at least one selected from the group consisting of amine, ammonium, phosphonium, sulfonium, and a polymer having functional groups of salts thereof. For example, the cationic water-soluble polymer may be or include a polymer having an amine group, and may be at least one selected from the group consisting of, without being limited to, polyethylene amine and polyamine as an example.

The water-dispersible polymer may be, without being limited to, at least one selected from the group consisting of water-dispersible polyurethane and water-dispersible polyester.

The binder may include a water-based polymer and a water-dispersible polymer. For example, the binder may include a water-based polymer having binder properties and dispersing properties and water-dispersible polyurethane having fire-resistant properties. As an example, the binder may include polyvinyl alcohol and water-dispersible polyurethane.

The weight ratio of the water-based polymer to the water-dispersible polymer may be in a range of 1:1 to 1:5, 1:1 to 1:4, or 1:2 to 1:3. When the weight ratio of the water-based polymer to the water-dispersible polymer is within the above range, fire resistance and mechanical properties of the insulation sheet may be further improved in addition to the thermal insulation, dustiness, and compression properties of the insulation sheet.

The content of the binder may be in a range of 0.5 wt% to 20 wt%, 2 wt% to 15 wt%, or 8 wt% to 15 wt%, based on the total amount of the aerogel layer. An insulation sheet for batteries including an aerogel layer including a binder within the above range may have improved dustiness.

The dispersant may be or include at least one selected from the group consisting of a surfactant, a silane coupling agent, and a phosphate-based salt. For example, the dispersant may include at least one of, without being limited to, a non-ionic surfactant, an anionic surfactant, an amphoteric surfactant, a natural surfactant such as lecithin, and phosphate.

Further inclusion of the dispersant may further improve the dispersion of the aerogel during manufacture of the aerogel layer, resulting in even dispersion of the fibrous support and the aerogel.

The content of the dispersant may be in a range of 0.1 wt% to 6 wt%, 0.1 wt% to 5 wt%, 0.1 wt% to 3 wt%, or 1 wt% to 3 wt% based on the total amount of the aerogel layer. When the dispersant is included within the above range, it is possible to manufacture the aerogel layer at low cost and to manufacture an insulation sheet having excellent or advantageous thermal insulation, uniformity, and dustiness using the same.

In an embodiment, the binder and the dispersant may be included in a weight ratio in a range of 1:0.001 to 1:0.67, 1:0.001 to 1:0.5, or 1:0.001 to 1:0.3. Mixing the binder and the dispersant in a weight ratio within any of the above ranges may result in more uniform dispersion of the aerogel in the aerogel layer.

In an embodiment, the fibrous support may be included so as to account for a range of 25 wt% to 60 wt%, the aerogel may be included so as to account for a range of 30 wt% to 70 wt%, and the binder may be included so as to account for a range of 2 wt% to 15 wt%, based on the total amount of the aerogel layer.

As an example, the fibrous support may be included so as to account for a range of 30 wt% to 50 wt%, the aerogel may be included so as to account for a range of 40 wt% to 60 wt%, and the binder may be included so as to account for a range of 8 wt% to 15 wt%, based on the total amount of the aerogel layer. When the aerogel layer is formed within any of the above ranges, it is possible to realize excellent or advantageous thermal insulation while improving durability, and it is possible to improve the binding between the fibrous support and the aerogel, thereby reducing or preventing dust generation.

In an embodiment, the fibrous support may be included so as to account for a range of 25 wt% to 60 wt%, the aerogel may be included so as to account for a range of30 wt% to 70 wt%, the binder may be included so as to account for a range of 2 wt% to 15 wt%, and the dispersant may be included so as to account for a range of 0.1 wt% to 3 wt%, based on the total amount of the aerogel layer.

As an example, the fibrous support may be included so as to account for a range of 30 wt% to 50 wt%, the aerogel may be included so as to account for a range of 40 wt% to 60 wt%, the binder may be included so as to account for a range of 5 wt% to 10 wt%, and the dispersant may be included so as to account for a range of 0.1 wt% to 2 wt%, based on the total amount of the aerogel layer. When the aerogel layer is formed within the above range, it is possible to realize excellent or advantageous thermal insulation while improving durability, and it is possible to improve the binding between the fibrous support and the aerogel, thereby reducing or preventing dust generation.

The flexible polymer included in the coating layer is not particularly restricted as long as the polymer is flexible. For example, the flexible polymer may be at least one selected from the group consisting of a fluorinated polymer, a polyurethane-based polymer, a polyolefin-based polymer, and a silicone-based polymer.

The fluorinated polymer may be at least one selected from the group consisting of, for example, polytetrafluoroethylene (PTFE), perfluoroalkoxyethylene (PFA), fluoroethylenepropylene (FEP), ethylene-tetrafluoroethylene (ETFE), polyvinylidene fluoride (PVDF) and polychlorotrifluoroethylene (PCTFE). The fluorinated polymer may be a material that is concurrently flexible and at the same time inherently a flame retardant.

The polyurethane-based polymer is not particularly restricted as long as the polyurethane-based polymer is ordinary polyurethane manufactured by polymerization of polyol and polyisocyanate. Polyol may be ordinary polyol used, for example, in the manufacture of polyurethane, and may be at least one selected from the group consisting of polyether polyol, polyester polyol, polyamide polyol, polyesteramide polyol, polythioether polyol, polycarbonate polyol, polyacetal polyol, polyolefin polyol, polysiloxane polyol, acrylic polyol, and silicone polyol. Polyisocyanate may include ordinary polyisocyanate used, for example, in the manufacture of polyurethane, and may be or include at least one selected from the group consisting of toluene diisocyanate, isophorone diisocyanate, cyclohexane-1.4-diisocyanate, 4,4-dicyclohexylmethane diisocyanate, 4,4-di(aminocyclohexyl)methane hexamethylene diisocyanate, 1,4-phenylene diisocyanate, 4,4-diphenylmethane diisocyanate, 1,5-naphthalene diisocyanate, trimethylhexamethylenediisocyanate, and norbornane diisocyanate.

The polyolefin-based polymer may be at least one selected from the group consisting of, for example, polyethylene, polypropylene, polybutylene, polypentene, polyvinylidene fluoride, and polymethylmethacrylate.

The silicone-based polymer may be at least one selected from the group consisting of, for example, a silicone elastomer, polydimethylsiloxane, polymethylethylsiloxane, polydiethylsiloxane, polymethylphenylsiloxane, polydiphenylsiloxane, and polyethylphenylsiloxane.

The content of the flexible polymer may be in a range of 75 wt% to 99 wt%, 85 wt% to 98 wt%, 90 wt% to 97 wt%, or 94 wt% to 97 wt% of the total amount of the coating layer. By forming a coating layer including a flame retardant within any of the above ranges on the surface of the aerogel layer having excellent or advantageous thermal insulation, the insulation sheet for batteries may have not only thermal insulation but also fire resistance and flame retardancy or non-flammability.

The coating layer may further include a flame retardant. The type of the flame retardant is not particularly restricted, and the flame retardant may be, for example, at least one selected from the group consisting of an inorganic flame retardant, a phosphorus-based flame retardant, a nitrogen compound-based flame retardant, a silicone-based flame retardant, a melamine-based flame retardant, a halogen-based flame retardant, and a polyhydric alcohol-based flame retardant.

The inorganic flame retardant may include a metal oxide and a metal hydroxide. For example, the inorganic flame retardant may be at least one selected from the group consisting of, without being limited to, silicon oxide, magnesium hydroxide, aluminum hydroxide, antimony oxide, sodium carbonate, zinc oxide, iron oxide, tin oxide, zinc borate, and calcium borate.

The phosphorus-based flame retardant may include an ordinary phosphorus-containing flame retardant. For example, the phosphorus-based flame retardant may include at least one selected from the group consisting of, without being limited to, phosphate, phosphonate, phosphinate, phosphine oxide, phosphazene, and ammonium salts thereof.

The phosphorus-based flame retardant may include two or more hydroxyl groups at the end of a functional group. As an example, the phosphorus-based flame retardant may include ammonium phosphate having a multifunctional hydroxyl group. The use of a phosphorus-based flame retardant having a multifunctional hydroxyl group may provide excellent or advantageous flame retardancy.

The nitrogen compound-based flame retardant may be at least one selected from the group consisting of, without being limited to, an aliphatic amine compound, an aromatic amine compound, a nitrogenous bicyclic compound, a cyanide compound, ammonium hydroxide, an aliphatic amide, an aromatic amide, urea, and thio-urea.

The silicone-based flame retardant may be a silicone resin and a silicone oil. The silicone resin may include a resin having the structure of RSiO, where R may indicate an alkyl group of carbon number 1 to 10, such as a methyl group, an ethyl group, or a propyl group, an aromatic group, or a substituent in which at least one of hydrogens of the alkyl group and the aromatic group is substituted with a vinyl group. The silicone oil may be at least one selected from the group consisting of, without being limited to, polydimethylsiloxane and modified polydimethylsiloxane in which at least one methyl group of the side chain or terminal of polydimethylsiloxane is modified by at least one of hydrogen, an alkyl group, a cyclohexyl group, a phenyl group, a benzyl group, an epoxy group, a polyether group, a carboxyl group, a mercapto group, a chloroalkyl group, an alkyl alcohol ester group, an alcohol group, an allyl group, a vinyl group, and a trifluoromethyl group.

The melamine-based flame retardant may be at least one selected from the group consisting of, without being limited to, melamine phosphate, dimelamine phosphate, melamine pyrophosphate, and melamine cyanurate.

Any halogen-based compound capable of serving as a flame retardant may be used as the halogen-based flame retardant without limitation. For example, the halogen-based flame retardant may be at least one selected from the group consisting of, without being limited to, decabromo diphenyl ether, decabromo diphenyl ethane, tetrabromo bisphenol-A, tetrabromo bisphenol-A epoxy oligomer, octabromo trimethylphenyl indane, ethylene-bis-tetrabromophthalimide, tris(tribromophenol)triazine, and polystyrene bromide.

The polyhydric alcohol-based flame retardant may be at least one selected from the group consisting of, for example, pentaerythritol, dipentaerythritol, trimethylolpropane, and ethylene glycol. As an example, the polyhydric alcohol-based flame retardant may be dipentaerythritol.

The flame retardant may include a phosphorus-based flame retardant and a polyhydric alcohol-based flame retardant, in which case flame retardancy may be achieved without the release of harmful substances.

The flame retardant may include a phosphorus-based flame retardant and a polyhydric alcohol-based flame retardant in a weight ratio in a range of 1:0.1 to 1:0.5, 1:0.1 to 1:0.4, 1:0.15 to 1:0.35, or 1:0.15 to 1:0.25. When the phosphorus-based flame retardant and the polyhydric alcohol-based flame retardant are mixed within the above range, the elastic modulus of the coating layer may be excellent or advantageous, and the flame retardancy of the insulation sheet may be improved.

The content of the flame retardant may be in a range of 1 wt% to 25 wt%, 2 wt% to 15 wt%, 3 wt% to 10 wt%, or 3 wt% to 6 wt%, based on the total amount of the coating layer. By forming a coating layer including a flame retardant within any of the above ranges on the surface of the aerogel layer having excellent or advantageous thermal insulation, the insulation sheet for batteries may have not only thermal insulation but also fire resistance and flame retardancy or non-flammability.

The coating layer may include no filler, meaning that any filler is excluded from the coating layer. The filler may be, without being limited thereto, at least one selected from the group consisting of, for example, fumed silica, diatomaceous earth, halloysite, carbon nanotubes, perlite, silica, alumina, barium sulfate, mud, talc, mica powder, aluminum hydroxide, magnesium hydroxide, calcium carbonate, magnesium carbonate, magnesium oxide, boron nitride, aluminum borate, barium titanate, calcium titanate, magnesium titanate, bismuth titanate, titanium oxide, barium zirconate, calcium zirconate, and vermiculite.

The aerogel layer may be a hexahedron having an upper surface, a lower surface, and a border side surface between the upper surface and the lower surface, and a coating layer may be formed so as to cover the entire surface of the aerogel layer.

As an example, the coating layer may cover the entire surface of the aerogel layer including the upper surface, the lower surface, and the side surface of the aerogel layer. An insulation sheet for batteries having a coating layer formed so as to cover the entire surface of the aerogel layer as described above may be disposed between a plurality of cells, wherein an upper surface and a lower surface of the insulation sheet for batteries may face a plurality of cells disposed on opposite side surfaces of the insulation sheet for batteries, respectively. A coating layer having flame retardancy may be formed on the entire surface of the insulation sheet for batteries, which may reduce or prevent the insulation sheet from burning, and may hinder or block flames in the event of thermal runaway of one cell, thereby reducing or inhibiting the propagation of the flames to cells adjacent thereto and effectively reducing or preventing the spread of the flames in a battery module having the plurality of cells.

In an embodiment, the thickness of the coating layer is 20% or less of a total thickness of the insulation sheet for batteries. The thickness of the coating layer may be in a range of 20% or less, 1% to 20%, 5% to 17%, or 8% to 12% of the total thickness of the insulation sheet for batteries. By forming the coating layer so as to have a thickness within any of the above ranges, the insulation sheet for batteries may have excellent or advantageous thermal insulation and flame retardancy or non-flammability.

The coating layer may include a flexible polymer and a flame retardant dispersed in the flexible polymer, wherein the flexible polymer may be at least one selected from the group consisting of a polyurethane-based polymer and a silicone-based polymer, and the flame retardant may be at least one selected from the group consisting of a polyhydric alcohol-based flame retardant and a phosphorus-based flame retardant. In this case, the aerogel layer may be hindered or prevented from falling off and scattering, which may be caused by external impact, workability may be improved, contamination of an instrument may be reduced or prevented, and excellent advantageous thermal insulation and flame retardancy or non-flammability may be achieved.

In an embodiment, the elastic modulus of the coating layer measured in accordance with ASTM D882 may be 8 MPa or less. For example, the elastic modulus of the coating layer measured in accordance with ASTM D882 may be in a range of 1 MPa to 8 MPa, 3 MPa to 7 MPa, or 3 MPa to 5 MPa.

A method of manufacturing an insulation sheet for batteries according to an embodiment may include a step of forming an aerogel layer including an aerogel and a step of forming a coating layer so as to cover the entire surface of the aerogel layer, wherein the coating layer may include a flexible polymer and a flame retardant dispersed in the flexible polymer, and the elastic modulus of the coating layer measured in accordance with ASTM D882 may be 8 MPa or less.

In an embodiment, the step of forming the aerogel layer may include the steps of mixing a solvent with a functional material including a binder, a dispersant, or a combination thereof to manufacture a solvent mixture, mixing the solvent mixture with an aerogel to manufacture an aerogel mixture, and mixing the aerogel mixture with a fibrous support to manufacture an aerogel composition.

In the step of mixing the solvent with the functional material to manufacture the solvent mixture, the solvent may be mixed with the binder, or the solvent may be mixed with the binder and the dispersant.

The solvent may be at least one selected from the group consisting of a polar solvent and a non-polar solvent.

The polar solvent may be at least one selected from the group consisting of water and an alcohol-based solvent.

Water may be at least one selected from the group consisting of, for example, purified water and deionized water.

The alcohol-based solvent may be at least one selected from the group consisting of, for example, without being limited to, methanol, ethanol, propanol, pentanol, butanol, hexanol, ethylene glycol, propylene glycol, diethylene glycol, and glycerol.

The non-polar solvent may include a hydrocarbon-based solvent. For example, the hydrocarbon-based solvent may be at least one selected from the group consisting of hexane, pentane, heptane, toluene, and benzene, and may be, without being limited to, an alkane solvent such as hexane, or a mixture including an alkane solvent.

The solvent may include water. The use of water as a solvent may effectively reduce raw material costs and post-processing costs. When water is used as a solvent, however, water may not satisfactorily mix with the aerogel because the aerogel is hydrophobic. In an embodiment, the aerogel may be dispersed evenly by controlling the design of a mixing process, the mixing conditions, the addition of the binder and the dispersant, and the amount of the binder and the dispersant. This even dispersion of the aerogel in the composition may enable the formation of an insulation sheet for batteries having excellent or improved thermal insulation, durability, and dustiness at a thin thickness without the use of a large amount of binder.

The solvent may be included such that the weight ratio of the solvent to the total amount of solids in the aerogel composition is in a range of 1:1 to 1:90. For example, the weight ratio of the solvent to the total amount of solids in the aerogel composition may be in a range of 1:50 to 1:70, 1:20 to 1:30, or 1:2 to 1:10. By controlling the weight ratio of the solvent to the total amount of solids in the aerogel composition within the above range, dispersibility, coatability, and phase stability may be compatible.

A detailed description of the binder and the dispersant may be similar to or the same as described above.

In the step of mixing the solvent mixture with aerogel to manufacture the aerogel mixture, a detailed description of the aerogel may be similar to or the same as described above.

In the step of mixing the aerogel mixture with the fibrous support to manufacture the aerogel composition, a detailed description of the fibrous support may be similar to or the same as described above.

In each of the step of mixing the solvent with the functional material including the binder, the dispersant, or the combination thereof to manufacture the solvent mixture, the step of mixing the solvent mixture with the aerogel to manufacture the aerogel composition, and the step of mixing the aerogel mixture with the fibrous support to manufacture the aerogel composition, the mixing may be performed using a mixer. For example, the mixer may include, without being limited to, a planetary mixer, a planetary Despa^{™} (PD) mixer, a Thinky^{™} mixer, and a C-mixer.

As an example, the planetary mixer may be used to mix the solvent mixture with the aerogel. The use of the planetary mixer to mix the solvent mixture with the aerogel may allow the aerogel to be uniformly dispersed in the solvent.

The planetary mixer may be a device that may be used to mix or stir different substances in order to produce a homogeneous mixture. The planetary mixer may include a blade capable of performing planetary motion.

In an embodiment, the planetary mixer may include at least one of one or more planetary blades and one or more high-speed dispersing blades. As an example, the planetary mixer may include at least one planetary blade and at least one high-speed dispersing blade.

Each of the planetary blade and the high-speed dispersing blade may be configured to continuously rotate about an axis thereof. The rotation speed may be expressed in rotations per minute (rpm).

In an embodiment, the planetary mixer may include a first blade and a second blade, the first blade and the second blade having different axes of rotation. For example, the first blade may be a low speed blade, and the second blade may be a high speed blade. The low speed and the high speed refer to relative rotational speeds between the first blade and the second blade. As an example, the first blade may be an open blade, and the second blade may be a Despa^{™} blade.

The rotational speed of the first blade may be, for example, in a range of 10 rpm to 100 rpm, 10 rpm to 60 rpm, or 30 rpm to 70 rpm. The rotational speed of the second blade may be, for example, in a range of 100 rpm to 2000 rpm, 100 rpm to 1000 rpm, 300 rpm to 1700 rpm, or 500 rpm to 1700 rpm.

When the functional material is added to and mixed with the solvent, the rotational speed of the first blade may be in a range of 10 rpm to 60 rpm, 20 rpm to 50 rpm, or 30 rpm to 40 rpm, and the rotational speed of the second blade may be in a range of 300 rpm to 1700 rpm, 600 rpm to 1000 rpm, or 700 rpm to 800 rpm. When the solvent and the functional material are mixed with each other, as described above, the solvent mixture in which the binder, the dispersant, or the combination thereof is uniformly dispersed may be manufactured to facilitate mixing of the aerogel in a subsequent process.

When the solvent mixture and aerogel powder are mixed with each other, the rotational speed of the first blade of the mixer may be in a range of 30 rpm to 70 rpm, 40 rpm to 70 rpm, or 60 rpm to 70 rpm, and the rotational speed of the second blade may be in a range of 500 rpm to 1700 rpm, 600 rpm to 1600 rpm, or 800 rpm to 1500 rpm. When the aerogel powder is added to and mixed with the solvent mixture, as described above, the aerogel powder may be hindered or prevented from clumping together to induce uniform dispersion.

When the aerogel mixture and the fibrous support are mixed with each other, the rotational speed of the first blade of the mixer may be in a range of 10 rpm to 60 rpm, 20 rpm to 50 rpm, or 30 rpm to 40 rpm, and the rotational speed of the second blade may be in a range of 300 rpm to 1700 rpm, 400 rpm to 1500 rpm, or 800 rpm to 1200 rpm. Mixing the aerogel mixture with the fibrous support as described above may remove air bubbles in the composition, control the viscosity, and facilitate dispersion of the fibrous support in the evenly dispersed aerogel, such that the aerogel surrounds the periphery of the fibrous support in the composition. A binder may be present between the aerogel and the fibrous support to improve the binding between the aerogel and the fibrous support.

In an embodiment, the aerogel layer may be formed in a monolayer structure or a multilayer structure. When the aerogel layer is formed in a multilayer structure, the aerogel layer may be formed so as to have 2 to 10 layers, 2 to 7 layers, or 2 to 5 layers.

The aerogel layer may be formed by, e.g., extruding, coating, or casting the aerogel composition using an ordinary method.

By forming the aerogel layer using the method according to the embodiment, thermal insulation and durability of the insulation sheet for batteries may be improved, and the aerogel may be hindered or prevented from falling off and creating dust when the insulation sheet for batteries is manufactured or installed in an apparatus.

In an example embodiment, the step of forming the coating layer so as to cover two or more surface parts of the entire surface of the aerogel layer may be performed by dipping the aerogel layer into a coating layer formation solution.

The coating layer formation solution may include a flexible polymer or a flexible polymer and a flame retardant. A detailed description of the flexible polymer and the flame retardant may be the same as described above.

When the aerogel layer is dipped into the coating layer formation solution, a coating layer formation solution dispersed or dissolved using a suitable solvent may be used, in which case the viscosity may be controlled to form a uniform coating layer.

In an embodiment, the aerogel layer may be dipped into the coating layer formation solution and may be dried at a temperature above the boiling point of the solvent to manufacture an insulation sheet for batteries according to an embodiment.

In an embodiment, the method may further include a step of crosslinking the aerogel layer after dipping the aerogel layer into the coating layer formation solution. The crosslinking step may improve cohesion between the aerogel layer and the coating layer.

The crosslinking method is not particularly restricted, and, e.g., a thermal crosslinking method and an ultraviolet (UV) crosslinking method may be used.

Thermal crosslinking may be performed at a temperature in a range of 25 °C to 150 °C for a reaction time of 10 seconds to 30 minutes.

UV crosslinking may be performed by irradiating with UV light for 10 seconds to 5 minutes.

For ultraviolet crosslinking, the coating layer formation solution may further include a crosslinking agent.

The crosslinking agent is not particularly restricted and may be at least one selected from the group consisting of, for example, a multifunctional acrylate-based compound, an isocyanate-based compound, an epoxy-based compound, an aziridine-based compound, and a metal chelate-based compound.

The multifunctional acrylate-based compound may be at least one selected from the group consisting of, for example, pentaerythritol tri/tetraacrylate, dipentaerythritol hexaacrylate, trimethylolpropane triacrylate, ethylene glycol diacrylate, and hexamethylene diacrylate.

The isocyanate-based compound may be at least one selected from the group consisting of, for example, toluene diisocyanate, xylene diisocyanate, diphenylmethane diisocyanate, hexamethylene diisocyanate, isoform diisocyanate, tetramethylxylene diisocyanate, and naphthalene diisocyanate.

The epoxy-based compound may be at least one selected from the group consisting of, for example, ethylene glycol diglycidyl ether, triglycidyl ether, trimethylolpropanetriglycidyl ether, N,N,N',N'-tetraglycidylethylenediamine, and glycerin diglycidyl ether.

The aziridine-based compound may be at least one selected from the group consisting of, for example, N,N'-toluene-2,4-bis(1-aziridinecarboxide), N,N'-diphenylmethane-4,4'-bis(1-aziridinecarboxide), triethylenemelamine, bisisophthaloyl-1-(2-methylaziridine), and tri-1-aziridinylphosphineoxide.

The metal chelate-based compound may include, for example, a compound in which a multivalent metal, such as aluminum, iron, zinc, tin, titanium, antimony, magnesium, or vanadium, is coordinated to acetylacetone or ethyl acetoacetate.

For ultraviolet (UV) crosslinking, a photoinitiator may further be included.

The photoinitiator is not particularly restricted and may be at least one selected from the group consisting of, for example, benzophenone, acetophenone, chloroacetophenone, diethoxyacetophenone, benzoin, benzoin methyl ether, benzoin ethyl ether, benzoin isopropyl ether, benzoin isobutyl ether, benzoin acetic acid, benzoin acetic acid methyl, benzoin dimethylketal, 2,4-diethylthioxanthone, benzyl diphenylsulfide, tetramethylthiuram monosulfide, azobisisobutyronitrile, benzyl, dibenzyl, diacetyl, beta-chloroanthraquinone, thioxanthone, and 2-ethyl anthraquinone.

In an embodiment, a substrate may be disposed on one surface or opposite surfaces of the insulation sheet for batteries. One surface may refer to an upper surface or a lower surface of the insulation sheet for batteries on which the coating layer is formed, and opposite surfaces may refer to the upper surface and the lower surface of the insulation sheet for batteries.

For example, the substrate may include, without being limited to, a resin, a metal, an inorganic material other than the metal, or a composite thereof. The form of the substrate may be, without being limited to, a film, a membrane, a sheet, etc.

The resin may include at least one selected from the group consisting of, for example, polyethylene, polypropylene, polystyrene, polyethylene terephthalate, and polyamide.

The metal may include at least one selected from the group consisting of, for example, copper, nickel, cobalt, iron, chromium, vanadium, palladium, ruthenium, rhodium, molybdenum, tungsten, iridium, silver, gold, and platinum. When a substrate made of or including the above metal is used, the substrate may be subjected to anti-corrosion treatment or insulating treatment as needed.

The inorganic material may include at least one selected from the group consisting of calcium carbonate (CaCOs), talc, and mica.

As an example, the substrate may include an inorganic material, and as another example, the substrate may include mica. In this case, thermal insulation, durability, etc. of the insulation sheet may be improved.

A battery module according to an embodiment may include a plurality of cells and the insulation sheet for batteries disposed between the plurality of cells.

The cell may be a secondary battery cell. The secondary battery cell may be, for example, a lithium secondary battery. The lithium secondary battery may be manufactured in various forms, such as a lithium ion battery, an all-solid-state battery, or a lithium metal battery. For example, the lithium secondary battery may have a structure in which a positive electrode plate having a positive electrode active material applied thereto and a negative electrode plate having a negative electrode active material applied thereto are arranged such that a separator is interposed therebetween, and the lithium secondary battery may be received in a battery case together with an electrolytic solution in a sealed state to constitute a secondary battery cell. Depending on the shape of the battery case, the secondary battery cell may be classified as, e.g., a cylindrical secondary battery cell, a prismatic secondary battery cell, or a pouch-shaped secondary battery cell, and a plurality of secondary battery cells may be connected to each other in series or in parallel to constitute a battery module.

The secondary battery cell may require a high degree of stability, e.g., when overcharged, the positive electrode active material or an electrolyte may be subjected to decomposition and other side reactions, whereby heat may be emitted from the secondary battery, resulting in explosion of the secondary battery cell.

In an embodiment, an insulation sheet including a coating layer formed so as to cover a part or the entirety of the surface thereof is disposed between the cells, whereby the insulation sheet may have excellent or improved thermal insulation, fire resistance, and flame retardancy or non-flammability, and therefore it is possible to inhibit propagation of heat and flames in a cell to cells adjacent thereto due to thermal runaway of the cell.

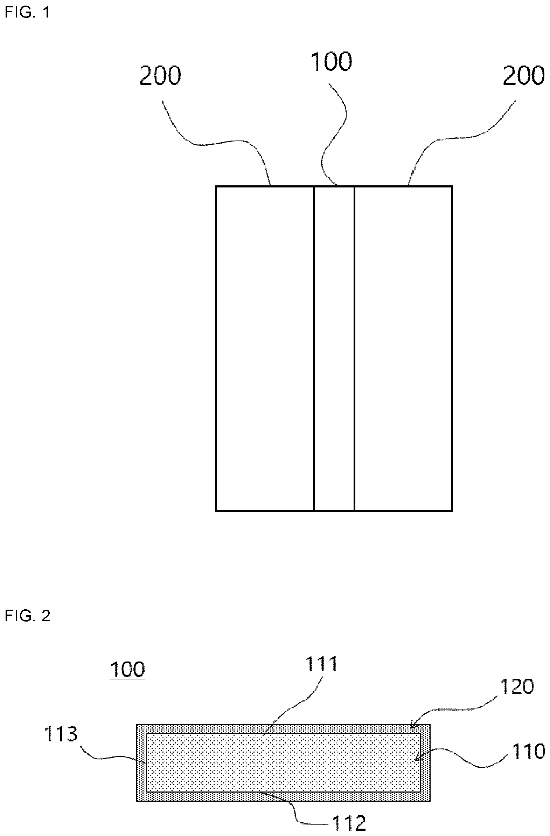

FIG. 1 is a schematic view showing a plurality of cells and an insulation sheet for batteries disposed between the cells, in accordance with an embodiment.

Referring to FIG. 1, an insulation sheet 100 for batteries according to an embodiment may be disposed between a plurality of cells 200 included in a battery module. When the insulation sheet 100 for batteries according to the embodiment is formed between the plurality of cells 200, it is possible to provide a battery module capable of hindering or blocking flames in advance in the event of thermal runaway of one cell, thereby maximally inhibiting the propagation of the flames to the other cell with a higher level of safety, and a battery pack including the same.

FIG. 2 is a schematic view showing the sectional structure of the insulation sheet for batteries according to the embodiment.

Referring to FIG. 2, the insulation sheet 100 for batteries may be formed so as to have a structure including an aerogel layer 110 and a coating layer 120 formed on the entirety of a surface of the aerogel layer 110 including an upper surface 111, a lower surface 112, and a border side surface 113 between the upper surface 111 and the lower surface 112.

Hereinafter, examples will be described. However, the following examples are intended only to illustrate or describe the disclosure and should not be construed as limiting the disclosure. Details that are not described herein may be sufficiently technically inferred by those skilled in the art, and therefore a description thereof will be omitted.

### (Manufacture of insulation sheet for batteries)

### Example 1

### 1. Manufacture of aerogel layer

A solvent mixture was manufactured by adding polyvinyl alcohol (Sigma Aldrich), as a binder, to deionized water, as a solvent, and mixing the same at 30 rpm using an open blade and at 700 rpm using a Despa^{™} blade. Subsequently, an aerogel having a BET value of 800 m²/g was added to the solvent mixture and mixed at 70 rpm using the open blade and at 1500 rpm using the Despa^{™} blade to manufacture an aerogel mixture. An aerogel composition was manufactured by adding glass wool to the aerogel mixture and mixing the same at 30 rpm using the open blade and at 1200 rpm using the Despa^{™} blade. A planetary mixer (DNTEK, PT-005) was used for mixing.

The solids content of the manufactured aerogel composition was found to be 50 wt% of the aerogel, 40 wt% of glass wool, and 10 wt% of the polyvinyl alcohol.

An aerogel layer was formed using the manufactured aerogel composition.

### 2. Manufacture of insulation sheet for batteries

The manufactured aerogel layer was dipped into a coating layer formation solution to form a coating layer on substantially the entire surface of the aerogel layer. The coating layer formation solution was manufactured so as to include 94.8 wt% of polyurethane (Shenzhen Jiian Chemical, PU solution) and 4 wt% of ammonium phosphate (Merck) and 1.2 wt% of dipentaerythritol (Merck) as a flame retardant.

After the aerogel layer was dipped into the coating layer formation solution, the aerogel layer was dried to manufacture an insulation sheet for batteries having a coating layer formed on the entire surface of the aerogel layer. The total thickness of the manufactured insulation sheet for batteries was 3 mm, the thickness of the aerogel layer was 2.7 mm, and the thickness of the coating layer was on an upper surface, a lower surface, and a border side surface of the aerogel layer was 0.15 mm.

### Example 2

An insulation sheet for batteries was manufactured using the same method as in Example 1 with a difference that a coating layer formation solution including 94.8 wt% of silicone elastomer (Gelest, EXsil 100) and 4 wt% of ammonium phosphate (Merck) and 1.2 wt% of dipentaerythritol (Merck) as a flame retardant was used.

### Example 3

An insulation sheet for batteries was manufactured using the same method as in Example 1 with a difference that the thicknesses of an aerogel layer and a coating layer were adjusted. It was found that the total thickness of the manufactured insulation sheet for batteries was 3 mm, the thickness of the aerogel layer was 2.6 mm, and the thickness of the coating layer was 0.2 mm.

### Example 4

An insulation sheet for batteries was manufactured using the same method as in Example 1 with a difference that the thicknesses of an aerogel layer and a coating layer were adjusted. It was found that the total thickness of the manufactured insulation sheet for batteries was 3 mm, the thickness of the aerogel layer was 2.4 mm, and the thickness of the coating layer was 0.3 mm.

### Example 5

An insulation sheet for batteries was manufactured using the same method as in Example 1 with a difference that a coating layer formation solution including 80 wt% of polyurethane (Shenzhen Jiian Chemical, PU solution) and 15 wt% of ammonium phosphate (Merck) and 5 wt% of dipentaerythritol (Merck) as a flame retardant was used.

### Example 6

An insulation sheet for batteries was manufactured using the same method as in Example 1 with a difference that a coating layer formation solution including 97.6 wt% of polyurethane (Shenzhen Jiian Chemical, PU solution) and 1.8 wt% of ammonium phosphate (Merck) and 0.6 wt% of dipentaerythritol (Merck) as a flame retardant was used.

### Example 7

An insulation sheet for batteries was manufactured using the same method as in Example 1 with a difference that a coating layer formation solution including 94.8 wt% of polyurethane (Shenzhen Jiian Chemical, PU solution) and 4.0 wt% of ammonium dihydrogen phosphate and 1.2 wt% of dipentaerythritol (Merck) as a flame retardant was used.

### Example 8

An insulation sheet for batteries was manufactured using the same method as in Example 1 with a difference that a coating layer formation solution including 95 wt% of polyurethane (Shenzhen Jiian Chemical, PU solution) and 5 wt% of ammonium hydroxide (Merck) as a flame retardant was used.

### Comparative Example 1

An insulation sheet for batteries was manufactured using the same method as in Example 1 with a difference that an aerogel layer having no coating layer formed on a surface thereof was used. It was found that the total thickness of the aerogel layer of the manufactured insulation sheet for batteries was 3 mm.

### Comparative Example 2

An insulation sheet for batteries was manufactured using the same method as in Example 1 with a difference that a coating layer formation including 100 wt% of polyurethane (Shenzhen Jiian Chemical, PU solution) was used.

### Comparative Example 3

An insulation sheet for batteries was manufactured using the same method as in Example 1 with a difference that a coating layer formation including 84.8 wt% of polyurethane (Shenzhen Jiian Chemical, PU solution), 4 wt% of ammonium phosphate (Merck) and 1.2 wt% of dipentaerythritol (Merck) as a flame retardant, and 10 wt% of fumed silica as a filler was used.

### Comparative Example 4

An insulation sheet for batteries was manufactured using the same method as in Example 1 with a difference that a coating layer was formed only on an upper surface of an aerogel layer, whereby the thickness of the aerogel layer was 2.7 mm and the thickness of the coating layer was 0.3 mm in a thickness direction.

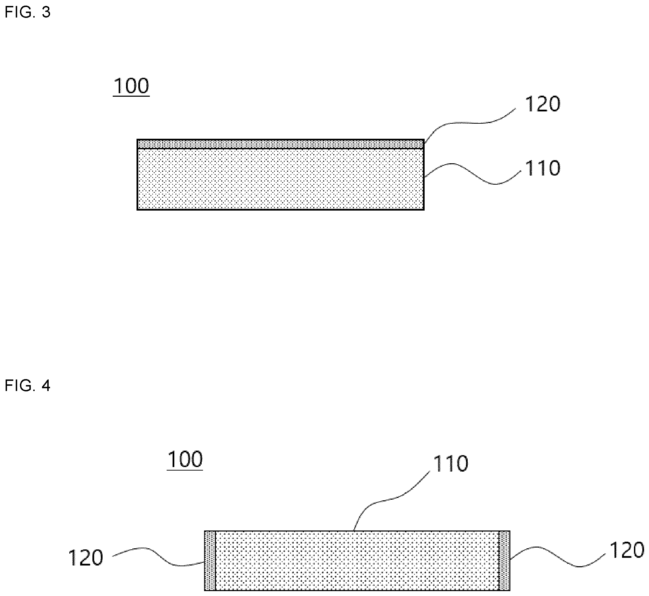

FIG. 3 is a schematic view showing the structure of an insulation sheet for batteries according to Comparative Example 4.

Referring to FIG. 3, the insulation sheet 100 for batteries was formed so as to have a structure including an aerogel layer 110 and a coating layer 120 formed on an upper surface of the aerogel layer.

### Comparative Example 5

An insulation sheet for batteries was manufactured using the same method as in Example 1 with a difference that a coating layer was formed on only a border side surface between an upper surface and a lower surface of an aerogel layer, whereby the thickness of the aerogel layer was 3 mm in the thickness direction.

FIG. 4 is a schematic view showing the structure of an insulation sheet for batteries according to Comparative Example 5.

Referring to FIG. 4, the insulation sheet 100 for batteries was formed so as to have a structure including an aerogel layer 110 and a coating layer 120 formed on border side surfaces between an upper surface and a lower surface of the aerogel layer.

### (Experimental Examples)

### Experimental Example 1: Evaluation of properties of coating layer

The elastic modulus of the coating layer of each of the insulation sheets for batteries manufactured in Examples 1 to 8 and Comparative Examples 1 to 5 was evaluated.

The elastic modulus was measured in accordance with ASTM D882, and the results are shown in Table 1 and Table 2 below.

### Experimental Example 2: Evaluation of properties of insulation sheet for batteries

### 1. Evaluation of thermal insulation

Thermal insulation of each of the insulation sheets manufactured in Examples 1 to 8 and Comparative Examples 1 to 5 was evaluated.

Each insulation sheet was put between a pair of opposing 1T thick aluminum plates and was placed on a heat press. An upper plate of the heat press was heated to 350 °C, and a lower plate of the heat press was not heated and was maintained at a starting temperature of 40 °C. Subsequently, a pressure of 20 kN was applied to the lower plate of the heat press, and the highest temperature of the lower plate of the heat press in 11 minutes was measured. The results are shown in Table 1 and Table 2 below.

### 2. Evaluation of compressibility

Each of the insulation sheets manufactured in Examples 1 to 8 and Comparative Examples 1 to 5 was cut to a size of 140 mm x 100 mm, and compressibility thereof was evaluated.

The ratio of the thickness upon applying a load of 5 kN as measured by a Universal Testing Machine (UTM) equipment to the thickness upon applying a load of 40 kN as measured by the UTM equipment was measured. The results are shown in Table 1 and Table 2 below.

### 3. Evaluation of flame retardancy

Flame retardancy of each of the insulation sheets manufactured in Examples 1 to 8 and Comparative Examples 1 to 5 was evaluated.

Flame retardancy was evaluated in accordance with a UL-94 V flame retardancy determination test (UL-94 V test (vertical burning test) method with ratings of V-0, V-1, and V-2, and the results are shown in Table 1 and Table 2 below.

### 3. Evaluation of dustiness

Dustiness of each of the insulation sheets manufactured in Examples 1 to 8 and Comparative Examples 1 to 5 was evaluated.

Dustiness was evaluated by measuring weight loss through vibration evaluation. A 140 mm x 100 mm specimen was subjected to vibration at 30 Hz for 1 hour using vibration evaluation equipment, and the weight loss was measured. The results are shown in Table 1 and Table 2 below. Dustiness of the insulation sheet was evaluated as good when weight loss was less than 1% and as poor when weight loss was 1% or more.

**[Table 1]**

| | Example | | | | | | | |
|---|---|---|---|---|---|---|---|---|
| | 1 | 2 | 3 | 4 | 5 | 6 | 7 | 8 |
| Elastic modulus (MPa) | 5 | 4 | 5 | 5 | 7 | 5 | 5 | 7 |
| Thermal insulation (°C) | 70 | 70 | 75 | 80 | 70 | 70 | 70 | 70 |
| Compressibility (%) | 45 | 45 | 47 | 50 | 44 | 45 | 45 | 41 |
| Flame retardancy | V-0 | V-0 | V-0 | V-0 | V-0 | V-0 | V-0 | V-0 |
| Dustiness | Good | Good | Good | Good | Good | Good | Good | Good |

**[Table 2]**

| | Comparative Example | | | | |
|---|---|---|---|---|---|
| | 1 | 2 | 3 | 4 | 5 |
| Elastic modulus (MPa) | - | 4 | 11 | 5 | 5 |
| Thermal insulation (°C) | 65 | 70 | 70 | 70 | 65 |
| Compressibility (%) | 30 | 47 | 33 | 45 | 30 |
| Flame retardancy | V-0 | NG | V-0 | V-0 | V-0 |
| Dustiness | Poor | Good | Good | Poor | Good |

In Table 2 above, NG means an evaluation result that does not meet V-2 rating.

Referring to Table 1 and Table 2 above, it can be seen that Comparative Example 1, in which the aerogel layer had a thickness of 3 mm, had higher thermal insulation than Examples 1 to 8, but compressibility and dustiness were reduced due to the absence of a coating layer. In Comparative Example 2, in which no flame retardant was included in the coating layer, flame retardancy could not be secured. In Comparative Example 3, in which 10 wt% of the filler was included in the coating layer, the elastic modulus of the coating layer and the compressibility of the insulation sheet were greatly reduced. In Comparative Example 4, in which the coating layer was formed only on the upper surface and the lower surface of the aerogel layer, dustiness was reduced. In Comparative Example 5, in which the coating layer was formed only on the border side surface of the aerogel layer, compressibility was reduced.

Thus, it can be seen that an insulation sheet for batteries according to an embodiment has excellent or advantageous thermal insulation, compressibility, flame retardancy, and dustiness.

As is apparent from the above description, an insulation sheet for batteries according to an embodiment may have excellent or advantageous thermal insulation, fire resistance, and flame retardancy or non-flammability, whereby it is possible to reduce or inhibit propagation of heat and flames in a cell to cells adjacent thereto due to thermal runaway of the cell.

The insulation sheet for batteries according to the example embodiment may have excellent or advantageous compressibility, mechanical strength, and dimensional stability, and may reduce or prevent detachment of an aerogel layer due to external impact, whereby it is possible to improve workability and to reduce or prevent contamination of an instrument.

## Claims

1. An insulation sheet (100) for batteries, the insulation sheet comprising:
an aerogel layer (110) comprising an aerogel; and
a coating layer (120) configured to cover an entire surface of the aerogel layer (110), wherein
the coating layer (120) comprises a flexible polymer and a flame retardant dispersed in the flexible polymer, and
an elastic modulus of the coating layer measured in accordance with ASTM D882 is 8 MPa or less.

2. The insulation sheet (100) as claimed in claim 1, wherein the aerogel has a BET specific surface area in a range of 500 m²/g to 1,000 m²/g.

3. The insulation sheet (100) as claimed in claim 1 or 2, wherein the aerogel layer (110) further comprises a fibrous support and a functional material comprising at least one of a binder and a dispersant, or a combination thereof.

4. The insulation sheet (100) as claimed in claim 3, wherein the fibrous support comprises at least one selected from a group consisting of natural fiber, silica fiber, glass fiber, carbon fiber, graphite fiber, mineral fiber, and polymer fiber.

5. The insulation sheet (100) as claimed in claim 3, wherein the binder comprises an aqueous polymer binder.

6. The insulation sheet (100) as claimed in claim 3, wherein the dispersant comprises at least one selected from a group consisting of a surfactant, a silane coupling agent, and a phosphate-based salt.

7. The insulation sheet (100) as claimed in claim 3, wherein the aerogel is included so as to account for a range of 10 wt% to 90 wt%, the fibrous support is included so as to account for a range of 5 wt% to 70 wt%, and the functional material is included so as to account for a range of 0.5 wt% to 20 wt%, based on a total amount of the aerogel layer.

8. The insulation sheet (100) as claimed in any of claims 1 to 7, wherein the flexible polymer comprises at least one selected from a group consisting of a fluorinated polymer, a polyurethane-based polymer, a polyolefin-based polymer, and a silicone-based polymer.

9. The insulation sheet (100) as claimed in any of claims 1 to 8, wherein the flame retardant comprises at least one of a phosphorus-based flame retardant and a polyhydric alcohol-based flame retardant.

10. The insulation sheet (100) as claimed in claim 9, wherein the flame retardant comprises at least one of a phosphorus-based flame retardant and a polyhydric alcohol-based flame retardant in a weight ratio in a range of 1:0.1 to 1:0.5.

11. The insulation sheet (100) as claimed in any of claims 1 to 10, wherein a content of the flame retardant is in a range of 1 wt% to 25 wt% based on a total amount of the coating layer.

12. The insulation sheet (100) as claimed in any of claims 1 to 11, wherein the coating layer (120) comprises no filler.

13. The insulation sheet (100) as claimed in any of claims 1 to 12, wherein
the flexible polymer comprises at least one selected from a group consisting of a polyurethane-based polymer and a silicone-based polymer, and
the flame retardant comprises at least one selected from a group consisting of a polyhydric alcohol-based flame retardant and a phosphorus-based flame retardant.

14. A method of manufacturing an insulation sheet (100) for batteries as claimed in any one of claims 1 to 13, the method comprising:
forming an aerogel layer (110) comprising an aerogel; and
forming a coating layer (120) so as to cover an entire surface of the aerogel layer (110), wherein
the coating layer (120) comprises a flexible polymer and a flame retardant dispersed in the flexible polymer, and
an elastic modulus of the coating layer measured in accordance with ASTM D882 is 8 MPa or less.

15. A battery module comprising:
a plurality of cells (200); and
the insulation sheet (100) as claimed in any one of claims 1 to 13 disposed between the plurality of cells.
